# EUROPÄISCHE PATENTANMELDUNG

(11) **EP 1 138 581 A2**
(43) Veröffentlichungstag der Anmeldung: **04.10.2001**
(21) Anmeldenummer: 01104518.4
(22) Anmeldetag: 02.03.2001
(51) Int. Cl.: B62D 25/04, B62D 29/00

(54) **Karosseriebauteil aus Stahl**

(30) Priorität: 28.03.2000 DE 10015325
(71) Anmelder: Volkswagen Aktiengesellschaft, 38436 Wolfsburg (DE)
(72) Erfinder: Welsch, Frank, Dr., 38179 Schwülper (DE); Walter, Helmut, 38162 Cremlingen (DE); Ramis, Juan, 38102 Braunschweig (DE); Zuloaga, Emiliano, 48340 Amorebieta/Biscaya (ES); Krauth, Werner, 38162 Cremlingen (DE)

(57) **Zusammenfassung**

Eine Tragrahmenstruktur einer Fahrzeugkarosserie wird aus einer Vielzahl von Karosseriebauteilen zusammengesetzt. Zur Schaffung einer leichtgewichtigen, einfach montierbaren und unfallsicheren Fahrzeugkarosserie wird vorgeschlagen, mindestens eines der Karosseriebauteile als dünnwandiges Stahlgußteil auszubilden. Dabei werden an Bauteilen bis 1,5 m Länge Wanddicken bis hinab zu 1,0 mm erreicht. Bei einer Türsäule läßt sich so gegenüber einer herkömmlichen Blech-Türsäule ohne Einbußen bei der Festigkeit eine Gewichtseinsparung von 25% erzielen. Gleichzeitig wird die Anzahl der Zusammenbauteile der Türsäule bzw. der Tragrahmenstruktur erheblich vermindert.

## Beschreibung

Die Erfindung bezieht sich auf das Gebiet der Herstellung von Fahrzeugkarosserien und insbesondere auf ein Karosseriebauteil aus Stahl.

Selbsttragende Fahrzeugkarosserien umfassen eine Tragrahmenstruktur, die aus einer Vielzahl von einzelnen Karosseriebauteilen zusammengesetzt ist. Die Aufteilung der Tragrahmenstruktur in eine Vielzahl von einzelnen Karosseriebauteilen ist notwendig, um den unterschiedlichen Anforderungen an einzelne Bereiche der Karosserie Rechnung zu tragen. Zu nennen sind hier insbesondere die Unfallsicherheit, die Steifigkeit oder das Fahrzeuggewicht. Aus diesen Anforderungen resultieren zum Teil sehr komplexe Raumformen der Tragrahmenstruktur, so daß sich die Tragrahmenstruktur in einem einzigen Herstellungsvorgang zumeist nicht mehr oder zumindest nicht mehr wirtschaftlich herstellen läßt. Tragrahmenstrukturen werden daher aus in grober Näherung extensiven, länglichen, stabartigen Elementen und kompakten Knotenelementen aufgebaut, welche stabartige Elemente miteinander verbinden. Beispiele für stabartige Elemente sind die Türsäulen oder die Dachlängsträger oder Dachquerträger.

Die einzelnen Karosseriebauteile sind in der Regel als separate Blechformteile ausgebildet und anschließend miteinander zusammengefügt, vorzugsweise zusammengeschweißt. Die Aufteilung des Tragrahmens in stabartige Elemente und Knotenelemente ermöglicht die Verwendung von Halbzeugen in Form von Strangprofilstücken für die im wesentlichen länglich ausgebildeten Elemente. Insbesondere komplex geformte Bauteile sind wiederum aus einer Vielzahl von Einzelblechstücken zusammengesetzt. So werden für eine B-Säule mitunter sieben Einzelblechstücke benötigt, die zunächst separat hergestellt und dann miteinander verbunden werden müssen. Der fertigungstechnische Aufwand bei einer aus Blechformteilen zusammengesetzten Tragrahmenstruktur ist dementsprechend hoch.

Zur Vereinfachung der Herstellung steifer Knotenelemente werden in jüngster Zeit auch Hydroformingverfahren verwendet, wodurch die Anzahl der Einzelteile eines Knotenelementes verringert werden kann. Vereinzelt kommen als Knotenelemente auch Stahlgußteile zum Einsatz. Allerdings sind die praktischen Verwendungsmöglichkeiten hier sehr beschränkt, da diese als dickwandige Bauteile Mindestwandstärken von mehr als 3 mm aufweisen und sich damit im Hinblick auf eine Verminderung des Fahrzeuggewichts als nachteilig erweisen. Ein solches Stahlguß-Knotenelement ist aus der WO 97/41010 bekannt. Dieses bekannte Knotenelement weist eine gitterartige Struktur auf und wird in die Enden stabartiger Blechelemente hineingesteckt.

Im Zuge der Ressourcenschonung besteht jedoch ein hohes Interesse an der Verringerung des Fahrzeuggewichts und folglich einer möglichst leichten Ausbildung der Fahrzeugkarosserie. Eine Möglichkeit zur Verringerung des Gewichts besteht in der Optimierung der Wanddicken des Tragrahmens. Diese hat unter der Berücksichtigung einer Vielzahl von Randparametern zu erfolgen, wie beispielsweise den Materialkosten, der Steifigkeit der Struktur, der Unfallsicherheit, den Befestigungsmöglichkeiten für Anbauteile wie z. B. Scharniere, den fertigungstechnischen Möglichkeiten oder der Eignung für eine Serienproduktion. Die einzelnen Randparameter bedingen sich hierbei gegenseitig. So erfordert die Verwendung dünnerer Bleche einen zusätzlichen Fertigungsaufwand durch ergänzende Versteifungsmaßnahmen, beispielsweise durch die Anbringung von Zusatzblechen an besonders belasteten Stellen. In der bereits erwähnten WO 97/41010 wird zum Zweck der Festigkeitssteigerung vorgeschlagen, den Tragrahmen aus Edelstahl zu fertigen, wobei Knotenelemente mit kleinsten Wanddicken in der Größenordnung von 3 bis 4 mm und stabartige Blechelemente mit Wanddicken in der Größenordnung von 1 bis 2 mm verwendet werden.

Eine weitere Entwicklungstendenz geht in Richtung der Verwendung von Leichtbauwerkstoffen. Aufgrund der Materialunterschiede zu Stahl sind hier jedoch eine eigene Konzeption des Tragrahmens sowie dementsprechend angepaßte Fertigungstechniken notwendig, wobei nur sehr eingeschränkt auf herkömmliche Techniken der Stahlverarbeitung zurückgegriffen werden kann. Bevorzugt werden zur Zeit vor allem Leichtmetallegierungen auf Aluminiumbasis eingesetzt. So ist aus der DE 41 39 305 A1 bekannt, einen Tragrahmen aus Hohlprofilstücken und Knotenelementen zusammenzusetzen. Die Hohlprofile sind dabei als dünnwandige Leichtmetall-Strangprofile, die Knotenelementes hingegen als Leichtmetall-Gußteile ausgebildet.

Aus der DE 41 39 303 A1 ist weiterhin bekannt, eine Türsäule, insbesondere eine B-Säule zumindest teilweise als Leichtmetall-Gußteil auszubilden. Im Falle einer mehrteiligen Türsäule besteht jedoch ein Potential für eine weitere Vereinfachung der Teileanzahl und des Montageaufwands. Die Ausbildung der gesamten Türsäule als Leichtmetall-Gußteil wird dort als eher problematisch beschrieben. Im Hinblick auf die Unfallsicherheit bei einem Seitenaufprall ist die Türsäule in ihrem unteren Bereich verstärkt, wozu ein Zusatzelement in Form eines Blechformteils oder eines Gußteil aus Leichtmetall verwendet wird. Weiterhin wird vorgeschlagen, die Türsäule aus zwei Leichtmetall-Gußteilen zusammenzusetzen.

In der EP 0 836 983 A2 wird zur Verstärkung einer gegossenen A-Säule aus Leichtmetall vorgeschlagen, einen Stahlträger mit einzugießen. Dies verkompliziert den Fertigungsaufwand jedoch wieder beträchtlich.

Vor diesem Hintergrund liegt in der Erfindung die Aufgabe zugrunde, den Bau einer leichtgewichtigen, einfach montierbaren und unfallsicheren Fahrzeugkarosserie zu ermöglichen.

Diese Aufgabe wird durch ein Karosseriebauteil aus Stahl einer Tragrahmenstruktur eines Kraftfahrzeuges gelöst, wobei das Karosseriebauteil als dünnwandiges Stahlgußteil ausgebildet ist.

Die erfindungsgemäße Lösung beschreitet einen im Fahrzeugbau bisher nicht verfolgten Weg. Trotz der erreichbaren Vorteile wurden dünnwandige Karosseriebauteile aus Stahl bisher stets aus Blechmaterial hergestellt. Im Hinblick auf eine Gewichtseinsparung stand vor allem die Verwendung von Leichtmetallen im Vordergrund.

Durch Ausbildung von Knotenelementen und insbesondere auch der zwischen diesen angeordneten, weiteren Elemente des Tragrahmens als dünnwandige Stahlgußteile ergibt sich ein erhebliches Gewichtseinsparpotential in der Größenordnung von 25% gegenüber herkömmlichen Karosseriebauteilen aus Blech. Die Wanddicke wie auch die Formgebung läßt sich stufenlos nach den Festigkeitserfordernissen modellieren. Sie erreicht die Dicke von vergleichbaren, herkömmlichen Karosseriebauteilen aus Blech. Überdies können sehr komplexe Bauteile in einem einzigen Stück hergestellt werden, so daß der Aufwand des Zusammenfügens, der in einem solchen Fall bei einem aus Einzelblechstücken zusammengesetzten Bauteil unumgänglich wäre, entfällt. Dies stellt insbesondere bei räumlich extensiven Bauteilen und komplexen Knotenelementen eine erhebliche Fertigungsvereinfachung dar. Gerade bei komplexen Knotenelementen ergibt sich aus der dünnwandigen Ausbildung eine erhebliche Gewichtseinsparung gegenüber herkömmlichen Knotenelementen, insbesondere auch gegenüber herkömmlichen, dicken Gußknotenelementen der oben erläuterten Art. Weiterhin zeichnen sich die gegossenen Karosseriebauteile durch eine gute Schweißbarkeit aus, so daß diese anstelle eines entsprechenden Blechkarosseriebauteils in einer bereits bestehenden Fertigungslinie mit weiteren Karosseriebauteilen zu einem Tragrahmen zusammengefügt werden können. Einzelne Blechkarosseriebauteile oder Gruppen von diesen können problemlos durch ein dünnwandiges Gußkarosseriebauteil ersetzt werden. Insbesondere kann auch die bisherige Aufteilung in Knotenelemente und stabartige Elemente aufgehoben werden.

In einer vorteilhaften Ausgestaltung der Erfindung ist das Karosseriebauteil aus Edelstahl hergestellt. Die Verwendung von Edelstahl erlaubt bei hoher Festigkeit besonders geringe Wanddicken. Überdies wird hierdurch gleichzeitig eine hohe Korrosionsbeständigkeit erzielt, so daß eine bei Stahl üblicherweise zu diesem Zweck erforderliche Nachbehandlung eingespart werden kann. Zudem zeichnet sich Edelstahl durch eine gute Gießbarkeit aus. Damit sind auch sehr komplex geformte oder große Bauteile wirtschaftlich herstellbar, ohne daß dies mit einer größeren Anzahl von Ausschußteilen verbunden wäre.

Bevorzugt ist das Karosseriebauteil ein Niederdruckgußteil. Beim Niederdruckgießen ist die Gefahr von Gefügeverunreinigungen, welche die Festigkeit gerade von dünnwandigen Bauteilen besonders empfindlich stören können, gering. Damit läßt sich die Produktqualität weiter verbessern.

Zur zusätzlichen Versteifung des dünnwandigen Stahlgußteils sind an diesem bevorzugt Rippen ausgebildet. Die Anordnung der Rippen richtet sich nach den auf das Bauteil einwirkenden statischen und dynamischen Lasten, die beispielsweise bei einer FEM-Simulation ermittelt werden können. Hierdurch läßt sich bei Einhaltung oder auch einer weiteren Steigerung der Festigkeitseigenschaften eine erhebliche Gewichtseinsparung verwirklichen. Die Wände zwischen den Rippen können in diesem Fall sehr dünn ausgebildet werden, wobei die Wanddicke sehr variabel ist.

In einer weiteren, vorteilhaften Ausgestaltung der Erfindung sind an dem Karosseriebauteil Schweißbuckel zur Ankopplung weiterer Bauteile ausgebildet. Das Karosseriebauteil kann dann im Prinzip ohne eine aufwendige, weitere Bearbeitung in einen Tragrahmen eingefügt werden.

Zur Verbesserung der Maßhaltigkeit ist es jedoch vorteilhaft, wenn nach dem Gießen eine Glättung der Anbindungsflächen zur Ankopplung an weitere Bauteile vorgenommen wird. Diese kann beispielsweise in einem Preßvorgang erfolgen. Damit wird ein sehr präzises Zusammenfügen des Tragrahmens mit geringen Fertigungstoleranzen ermöglicht.

Das Karosseriebauteil kann weiterhin nach dem Gießen geschnittene Flansche und/oder Öffnungen aufweisen. Hierdurch wird einerseits eine hohe Maßhaltigkeit der Formgebung erzielt. Andererseits sind gießtechnisch bisweilen schwierig herzustellende Formen auf diese Weise mitunter einfacher zu verwirklichen.

Die Erfindung eignet sich besonders auch für die Herstellung von Karosseriebauteilen mit einer größten Außenlänge von mehr als 300 mm, die vor allem bei Türsäulen und Dachträgern auftritt. Beispielsweise bildet das Karosseriebauteil eine vollständige Türsäule in einem einzigen Stück aus. Der Fertigungs- und Montageaufwand läßt sich damit in einem erheblichen Umfang vermindern. Gegenüber einer Türsäule aus Blechteilen ergibt sich ein Gewichtseinsparungspotential von 25 bis 35 Prozent. Weiterhin ist es in diesem Sinne auch möglich, einen vollständigen Seitenteilinnenrahmen einer Fahrzeugkarosserie in einem einzigen Stück als dünnwandiges Stahlgußteil auszubilden.

Aus Gründen der Gewichtseinsparung ist das Karosseriebauteil dünnwandig, d.h. mit möglichst dünnen Wandabschnitten ausgebildet, wobei zumindest einzelne Wandabschnitte eine Wanddicke im Bereich zwischen 1,0 mm und 4,0 mm, bevorzugt im Bereich zwischen 1,5 mm und 3,0 mm aufweisen.

Für eine besonders stabile Eckverbindung werden bisweilen als Hydroformingteile ausgebildete Knotenelementen eingesetzt, die aus einem Hohlprofil hergestellt sind und an die anzuschließenden Tragrahmenelemente angepaßte Aufnahmen aufweisen. Derartige Knotenelemente lassen sich ebenfalls als dünnwandige Stahlgußteile herstellen. In einer vorteilhaft Ausgestaltung der Erfindung ist daher das Karosseriebauteil als kompaktes Knotenelement mit einer rohrartigen Aufnahme zur Ankopplung eines weiteren Karosseriebauteils ausgebildet.

Die oben genannte Aufgabe wird weiterhin gelöst durch eine Fahrzeugkarosserie, welche eine Tragrahmenstruktur mit mindestens einem Karosseriebauteil der vorstehend erläuterten Art umfaßt. Hiermit ergeben sich die bereits erläuterten Vorteile eines hohen Gewichtseinsparungspotentials in Verbindung mit einem verminderten Montageaufwand.

In einer vorteilhaften Ausgestaltung der Fahrzeugkarosserie wird die Tragrahmenstruktur aus stabartigen Elementen und diese miteinander verbindenden Knotenelementen gebildet. Weiterhin ist ein einstückiges Karosseriebauteil vorgesehen, das ein stabartiges Element und ein Knotenelement umfaßt. Hierdurch läßt eine hohe Funktionsintegration erzielen und die Vielfalt und Vielzahl der Bauteile weiter vermindern.

Die Erfindung wird nachfolgend anhand von in der Zeichnung dargestellten Ausführungsbeispielen näher erläutert. Die Zeichnung zeigt in
- Figur 1: ein erstes Ausführungsbeispiel eines dünnwandigen, im Stahlguß hergestellten Karosseriebauteils in Form einer Türsäule einer Tragrahmenstruktur für ein Kraftfahrzeug, und in
- Figur 2: einen Schnitt durch die Türsäule nach Figur 1.

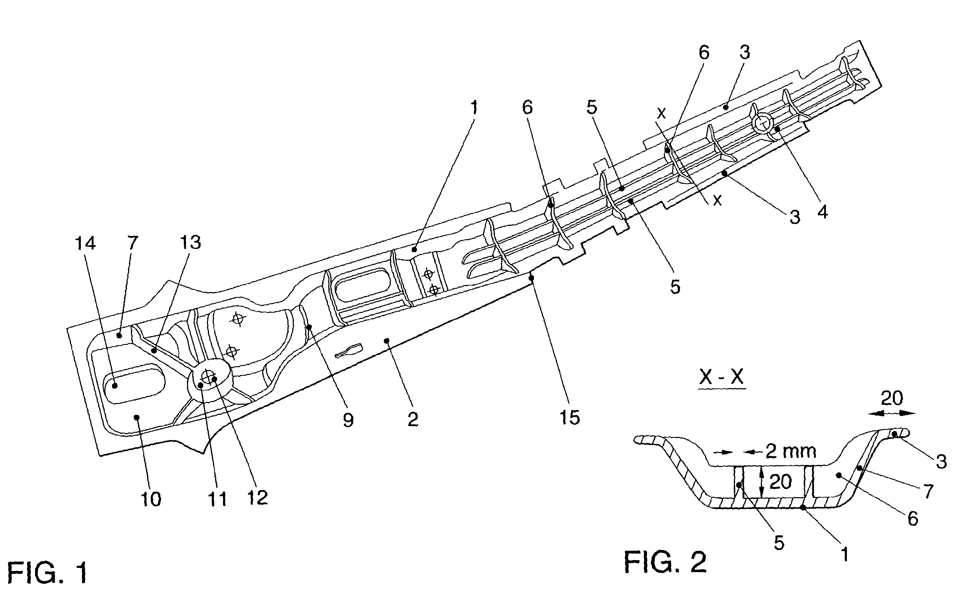

Das Ausführungsbeispiel in den Figuren 1 und 2 zeigt ein Karosseriebauteil in Form einer Türsäule 1, hier einer B-Säule, einer Tragrahmenstruktur aus Stahl für ein Personenkraftfahrzeug. Die Tragrahmenstruktur wird aus extensiven, stabartigen Elementen und diese miteinander verbindenden Knotenelementen gebildet. Als Knotenelemente werden hier solche Karosseriebauteile bezeichnet, die in räumlich kompakter Form eine vorzugsweise steife Verbindung der stabartigen Elemente ermöglichen. Unter letzteren werden räumlich extensive, vorwiegend längliche Karosseriebauteile wie Türsäulen oder Dachträger, aber auch flächenhafte Bauteile mit Tragfunktion verstanden, welche die räumliche Ausdehnung des Tragrahmens mitbestimmen. Das Fügen dieser Karosseriebauteile erfolgt überwiegend durch Zusammenschweißen, beispielsweise in einer weitgehend automatisierten Fertigungsstraße. Dabei ist es nicht unbedingt notwendig, daß stets zwischen zwei miteinander zu verbindenden, stabartigen Elementen ein Knotenelement vorgesehen ist. Vielmehr können bei geeigneter Ausbildung stabartige Elemente auch unmittelbar miteinander verschweißt werden.

Die in Figur 1 dargestellte Türsäule 1 ist als langgestrecktes, dünnwandiges Stahlgußteil ausgebildet, das über weite Abschnitte eine Wanddicke von 1,0 bis 3 mm aufweist. Diese ist in Abhängigkeit der auftretenden Belastungen gewählt, die beispielsweise über eine FEM Berechnung bestimmt oder experimentell ermittelt worden sind. Dabei können dickere Wandabschnitte stufenlos in dünnere Wandabschnitte übergehen. Aus Gründen der Gewichtseinsparung wird eine möglichst dünne Wanddicke vorgesehen, beispielsweise von 2 mm. Besonders belastete Stellen sind hingegen zusätzlich versteift. Bei dem dargestellten Ausführungsbeispiel weist die einteilige Türsäule 1 an ihrem Außenrand Flanschabschnitte 2 und 3 auf. Wie insbesondere aus Figur 2 zu erkennen ist, ergibt sich damit im Querschnitt, auf dessen Form ausdrücklich hingewiesen wird, eine wannenartige Form mit verbesserter Torsions- und Biegesteifigkeit.

Ein weiterer Versteifungseffekt wird durch die Ausbildung von Rippen erzielt. Ein oberer, an einen Dachholm anzubindender Abschnitt 4 der Türsäule 1, der sich später an der fertigen Karosserie etwa über den Bereich der Fensteraussparungen erstreckt, weist zwei sich im wesentlichen in Längsrichtung der Türsäule 1 erstreckende Längsrippen 5 auf, die hier parallel zueinander verlaufen. Diese Längsrippen 5 sind in Querrichtung von mehreren, untereinander beabstandeten Querrippen 6 durchsetzt. Die Querrippen 6 erstrecken sich zwischen den einander gegenüberliegenden Seitenrändern 7 des wannenartigen Querschnitts und schließen an die seitlichen Flanschabschnitte 3 an. Für einen oberen Anlenkpunkt eines Sicherheitsgurtes ist in einem Rippenkreuz eine Wandverdickung 8 ausgebildet, so daß dort hohe Zugkräfte sicher aufgenommen werden können, insbesondere ein Ausreißen des Anlenkpunktes vermieden wird.

Ein an den oberen Abschnitt 4 bodenseitig anschließender, unterer Abschnitt 9 der Türsäule 1 befindet sich an der späteren Fahrzeugkarosserie auf der Höhe der Türbeplankung. Dieser Bereich ist bei einem Seitenaufprall besonders gefährdet und dementsprechend hier mit größerer Breite ausgebildet. Das bodenseitige Ende des unteren Abschnittes 9 weist eine schalenartige Vertiefung 10 auf. In der schalenartigen Vertiefung 10 ist ein weiterer Befestigungspunkt für den Sicherheitsgurt in Form einer sockelartigen Wandverdickung 11 ausgebildet, die wiederum mit einer Ausnehmung oder auch Durchgangsöffnung 12 zur Fixierung des Sicherheitsgurts versehen ist. Zur Versteifung des Befestigungspunktes sind um diesen strahlenartig Versteifungsrippen 13 angeordnet, die sich von der Wandverdickung 11 zu dem Seitenrand 7 erstrecken.

Wie Figur 1 entnommen werden kann, ist die gesamte Türsäule 1 trotz der vorstehend erläuterten, komplexen Ausgestaltung als einstückiges, leichtgewichtiges Bauteil ausgebildet, das eine hohe statische und dynamische Festigkeit aufweist.

Ein weiteres Ausführungsbeispiel eines dünnwandigen Karosseriebauteils ist ein Knotenelement, dessen Wanddicken größtenteils wiederum im Bereich von 1,0 mm bis 3,0 mm liegen, wobei hier Wandabschnitte mit einer Dicke von 2 mm dominieren. Das Knotenelement weist eine rohrartige Aufnahme auf, über welche eine feste Ankopplung an ein anderes Karosseriebauteil erfolgen kann. Zur weiteren Versteifung des dünnwandigen Knotenelementes sind an diesem eine Vielzahl von Versteifungsrippen ausgebildet, deren Lage und Ausrichtung entsprechend den auftretenden Belastungen erfolgt.

Weiterhin ist es möglich, die Funktionen eines stabartigen Elementes und eines Knotenelementes in ein einziges, dünnwandiges Stahlguß-Karosseriebauteil zu integrieren. So kann beispielsweise ein vollständiger Seitenteilinnenrahmen der Tragrahmenstruktur als einstückiges, dünnwandiges Stahlguß-Karosseriebauteil ausgebildet werden.

In allen Fällen läßt sich durch die Verwendung von Edelstahl als Gußmaterial eine weitere Festigkeitssteigerung erzielen, wobei verschiedene Arten von Edelstählen verwendbar sind. Bevorzugt wird ein Edelstahl mit einer Festigkeit von mindestens 400 MPa und einer Bruchdehnung von etwa 25 Prozent eingesetzt. Beispielsweise kann hier ein Edelstahl verwendet werden, der neben Eisen weiterhin 0,2% Kohlenstoff, 5% Mangan, 0,4 % Silizium, 21 % Chrom, 1,1 % Nickel, 0,5 % Kupfer und 0,13 % Stickstoff enthält.

Neben einem guten Gießverhalten zeichnet sich dieser Stahl durch seine Korrosionsbeständigkeit und seine gute Umformbarkeit aus. Letzteres ist insbesondere dann von Interesse, wenn zur Optimierung der Maßhaltigkeit ein Nachschlagen des Stahlgußteils in einem Preßwerkzeug erfolgt. Hierdurch lassen sich sehr hohe Genauigkeiten an den Anbindungsflächen zu weiteren Karosseriebauteilen erzielen, so daß die Tragrahmenstruktur insgesamt mit engen Toleranzen herstellbar ist. Dabei kann das Stahlgußteil auch beschnitten, insbesondere durch Stanzen bearbeitet werden, um beispielsweise Öffnungen 14 innerhalb eines Wandabschnittes oder Aussparungen 15 am Rand eines Flansches 3 einfach auszubilden.

Gegenüber einer aus Blechformteilen zusammengesetzten Türsäule ergibt sich mit der in Figur 1 dargestellten Türsäule 1 aus dem vorgenannten Edelstahl eine Gewichtseinsparung von etwa 34 % ohne Einbußen bei den Festigkeitseigenschaften, wenn diese im Hinblick auf die Crashsicherheit, die dynamische und statische Steifigkeit, den Türdurchhang und die Gurtausreißfestigkeit untersucht werden.

Die Herstellung der einzelnen Stahlguß-Karosseriebauteile erfolgt in einem Niederdruck-Gußverfahren, bei dem während des Befüllens der Gußform von unten gegen die Schwerkraft vorzugsweise eine laminare Strömung vorliegt. Um insbesondere auch große und lange Formhohlräume zu befüllen, wird die Zuführung der Schmelze bis an die Gußform beheizt. Durch die langsame Befüllung der Gußform wird ein Einschwemmen von Verunreinigungen in das Bauteil vermieden. Die Verwendung von Edelstahl ermöglicht die Ausbildung besonders dünnwandiger Stahlgußteile mit Wanddicken bis hinab zu 1,0 mm, wobei sich Bauteile mit bis zu 1,5 m herstellen lassen. Nach der Entfernung der Angüsse steht das Bauteil unmittelbar zu einem Einbau in einen Tragrahmen zur Verfügung. Zur Verbesserung der Maß- und Formgenauigkeit wird jedoch bevorzugt ein Preßvorgang in einem Formwerkzeug zwischengeschaltet. Es ist auch möglich, lediglich Abschnitte, beispielsweise die Anbindungsflächen zu weiteren Bauteilen umformtechnisch oder spanend nachzubearbeiten.

### BEZUGSZEICHENLISTE

- 1: Türsäule
- 2: Seitenflansch
- 3: weiterer Seitenflansch
- 4: oberer Abschnitt der Türsäule
- 5: Längsrippe
- 6: Querrippe
- 7: Seitenrand
- 8: Wandverdickung
- 9: unterer Abschnitt der Türsäule
- 10: schalenartige Vertiefung
- 11: Wandverdickung
- 12: Durchgangsöffnung
- 13: Versteifungsrippen
- 14: Öffnung
- 15: Ausnehmung

## Patentansprüche

1. Karosseriebauteil aus Stahl einer Kraftfahrzeug-Tragrahmenstruktur, **dadurch gekennzeichnet, daß** das Karosseriebauteil (1) als dünnwandiges Stahlgußteil ausgebildet ist.

2. Karosseriebauteil nach Anspruch 1, **dadurch gekennzeichnet, daß** dieses aus Edelstahl hergestellt ist.

3. Karosseriebauteil nach Anspruch 1 oder 2, **dadurch gekennzeichnet, daß** dieses ein Niederdruckgußteil ist.

4. Karosseriebauteil nach einem der Ansprüche 1 bis 3, **dadurch gekennzeichnet, daß** an diesem Rippen (5, 6, 13) ausgebildet sind.

5. Karosseriebauteil nach einem der Ansprüche 1 bis 4, **dadurch gekennzeichnet, daß** an diesem Schweißbuckel zur Ankopplung weiterer Bauteile ausgebildet sind.

6. Karosseriebauteil nach einem der Ansprüche 1 bis 5, **dadurch gekennzeichnet, daß** dieses nach dem Gießen geglättete Anbindungsflächen zur Ankopplung weiterer Bauteile aufweist.

7. Karosseriebauteil nach einem der Ansprüche 1 bis 6, **dadurch gekennzeichnet, daß** dieses nach dem Gießen geschnittene oder gestanzte Flansche (2, 3) und/oder Öffnungen (14) aufweist.

8. Karosseriebauteil nach einem der Ansprüche 1 bis 7, **dadurch gekennzeichnet, daß** dieses eine größte Außenlänge von mehr als 300 mm aufweist.

9. Karosseriebauteil nach einem der Ansprüche 1 bis 8, **dadurch gekennzeichnet, daß** dieses Wandabschnitte mit einer Wanddicke im Bereich zwischen 1,0 mm und 4,0 mm, insbesondere im Bereich zwischen 1,5 mm und 3,0 mm aufweist.

10. Karosseriebauteil nach einem der Ansprüche 1 bis 9, **dadurch gekennzeichnet, daß** dieses eine einstückige Türsäule (1), insbesondere eine A-Säule oder B-Säule der Tragrahmenstruktur bildet.

11. Karosseriebauteil nach einem der Ansprüche 1 bis 9, **dadurch gekennzeichnet, daß** dieses als kompaktes Knotenelement mit einer rohrartigen Aufnahme zur Ankopplung eines weiteren Karosseriebauteils ausgebildet ist.

12. Karosseriebauteil nach einem der Ansprüche 1 bis 9, **dadurch gekennzeichnet, daß** dieses einen vollständigen Seitenteilinnenrahmen ausbildet.

13. Fahrzeugkarosserie umfassend eine Tragrahmenstruktur mit mindestens einem Karosseriebauteil (1) nach einem der Ansprüche 1 bis 12.

14. Fahrzeugkarosserie nach Anspruch 13, **dadurch gekennzeichnet, daß** die Tragrahmenstruktur aus stabartigen Elementen und diese miteinander verbindenden Knotenelementen gebildet wird, und **daß** ein einstückiges Karosseriebauteil (30) vorgesehen ist, das ein stabartiges Element und ein Knotenelement integriert.
